# EUROPÄISCHE PATENTSCHRIFT

(11) **EP 1 357 643 B1**
(45) Veröffentlichungstag und Bekanntmachung des Hinweises auf die Patenterteilung: **21.07.2010**
(21) Anmeldenummer: 03007641.8
(22) Anmeldetag: 03.04.2003
(51) Int. Cl.: H01R 13/516, H01R 13/66

(54) **Bus-Gehäuse und Einsatzstücke für die Kabeleinlassöffnungen des Bus-Gehäuses**
Bus-Housing and insert parts for the cable openings of the Bus-housing
Bus-boîtier et piéces d'insertion pour les ouvertures de cable du Bus-boîtier

(30) Priorität: 22.04.2002 DE 20206394 U; 06.09.2002 DE 20213780 U
(43) Veröffentlichungstag der Anmeldung: 29.10.2003
(73) Patentinhaber: Schmitt, Fred R., 74388 Talheim (DE)
(72) Erfinder: Schmitt, Fred R., 74388 Talheim (DE)
(74) Vertreter: Müller, Hans

(56) Entgegenhaltungen:
- EP-A- 1 052 737
- DE-U- 29 719 841
- FR-A- 2 744 851
- US-A1- 2001 002 622
- US-B1- 6 335 482

## Beschreibung

### TECHNISCHES GEBIET

Die Erfindung betrifft ein Bus-Gehäuse und dabei insbesondere ein störstrahlsicheres Bus-Gehäuse, das für den Anschluss eines D-Sub-Steckverbinders und zumindest zweier elektrischer Kabel ausgelegt ist. Die Erfindung betrifft auch Einsatzstücke, die in die Kabelöffnungen des Bus-Gehäuses eingesetzt werden, um entweder das Gehäuse zu verschließen oder ein Kabel an dem Gehäuse zu befestigen.

D-Sub-Steckverbinder sind genormt, wie beispielsweise durch die deutsche DIN 41652. Im Inneren eines mit einem solchen D-Sub-Steckverbinder versehenen Bus-Gehäuses enden die Kabeladern von elektrischen Kabeln. Die Adern können direkt oder indirekt über eine Leiterplatte mit den Kontakten des Steckverbinders elektrisch leitend verbunden werden. Derartige Bus-Gehäuse werden oftmals zu mehreren dicht aneinanderliegend platziert.

### STAND DER TECHNIK

Aus der DE 297 19 841 U1 ist ein störstrahlsicheres Bus-Gehäuse bekannt, an dessen einer Gehäuseseite ein D-Sub-Steckverbinder und an dessen gegenüberliegender anderer Gehäuseseite zwei elektrische Kabel angeschlossen werden können. Die beiden Kabeleingangsöffnungen sind treppenförmig angeordnet, wobei die Längsachsen der beiden anzuschließenden Kabel parallel zueinander ausgerichtet sind. Im Inneren des Gehäuses kann eine Leiterplatte als elektrisches Verbindungselement zwischen dem Steckverbinder und den Adern der beiden Kabel platziert werden. Derartige Gehäuse können dicht aneinanderliegend angeordnet werden, ohne Beeinträchtigung für die aus jedem Gehäuse herausführenden beiden Kabel. Die Kabel werden über Einsatzstücke, die mit einer Schwalbenschwanzausbildung ausgestattet sind, in den Öffnungen des jeweiligen Gehäuses zugfest gehalten. Die Schwalbenschwanzausbildung ermöglicht sowohl eine optimale Zugentlastung für das anzuschließende Kabel als auch eine äußerst wirkungsvolle elektrische Kontaktierung der Kabelabschirmung. Sofern kein Kabelabgang benötigt wird, wird die entsprechende Gehäuseöffnung mit einem ebenfalls besagte Schwalbenschwanzausbildung aufweisenden Blindstopfen verschlossen.

### DARSTELLUNG DER ERFINDUNG

Ausgehend von diesem vorbekannten Stand der Technik liegt der Erfindung die Aufgabe zugrunde, ein möglichst kleines Bus-Gehäuse der eingangs genannten Art anzugeben, an das ein D-Sub-Steckverbinder angeschlossen werden kann und das zwei dicht beieinanderliegende Kabeleingangs- beziehungsweise -ausgangsöffnungen besitzt.

Diese Erfindung ist für die Einsatzstücke, die in die Kabelöffnungen des Bus-Gehäuses eingesetzt werden können, durch die Merkmale des Anspruchs 1 und für das für solche Einsatzstücke ausgelegte Bus-Gehäuse durch die Merkmale des Anspruchs 14 gegeben. Sinnvolle Weiterbildungen der Erfindung sind Gegenstand von sich an diese Ansprüche anschließenden weiteren Ansprüchen.

Die erfindungsgemäßen Einsatzstücke und ein mit solchen Einsatzstücken ausgestattetes Bus-Gehäuse ermöglichen es, zwei an einem solchen Bus-Gehäuse angeschlossene Kabel gegenseitig dicht und parallel zueinander anzuordnen. Ein mit solchen zwei Kabel-Einlässen beziehungsweise -Auslässen versehenes Bus-Gehäuse kann dabei so klein ausgebildet werden, dass sein Querschnitt praktisch nicht größer zu sein braucht als er durch das Lichtraumprofil eines 9poligen D-Sub-Steckverbinders definiert und vorgegeben wird. Außerdem lassen sich solche Gehäuse auf Stoß dicht und platzsparend aneinanderlegen und dabei trotzdem jeweils mittels zweier Schrauben an Frontplatten oder sonstigen Baugruppenteilen fest und sicher anschrauben.

Das bei einem solchen Gehäuse zu verwendende Einsatzstück kann ein die betreffende Kabelöffnung verschließender Blindstopfen oder ein Crimpflansch sein, mit dem ein Kabel zugfest und mit guter elektrischer Kontaktierung am Bus-Gehäuse gehalten werden kann. Das Einsatzstück ist dabei ein einteiliges Bauteil mit einer zumindest bereichsweise umlaufenden Nut. Diese Nut korrespondiert mit einem in die Kabelöffnung des Gehäuses einspringenden, zumindest bereichsweise umlaufenden Steg. Die Nut des Einsatzstückes und der Steg in der Kabelöffnung sind formmäßig so einander angepasst, dass das Einsatzstück zugfest und mit guter elektrischer Kontaktierung in das Bus-Gehäuse eingesetzt werden kann. Statt des Crimpflansches kann auch ein Blindstopfen in die Öffnung eingesetzt werden, der ebenfalls die an dem Crimpflansch vorhandene zumindest bereichsweise umlaufende Nut besitzt, so dass in jede Kabelöffnung des Gehäuses wahlweise ein Blindstopfen oder ein Crimpflansch zum Anschluss eines Kabels eingesetzt werden kann. Mittels eines Blindstopfens lässt sich eine Kabelöffnung dicht verschließen.

Das Einsatzstück, das entweder als Blindstopfen oder als Crimpflansch ausgebildet ist, kann als Drehteil hergestellt werden. Das Drehteil kann einen nicht rotationssymmetrischen Oberflächenbereich besitzen, damit es verdrehsicher in der Kabelöffnung des Gehäuses sitzen kann.

Das als Crimpflansch ausgebildete Einsatzstück besitzt einen Ringbereich, der zwei voneinander beabstandete, umlaufende Flanschkragen aufweist. Zwischen den beiden Flanschkragen ist die vorstehendbereits erwähnte, zumindest bereichsweise umlaufende Nut ausgebildet. Zumindest einer der beiden Flanschkragen kann zumindest einen abgeflachten ebenen Oberflächenbereich besitzen, um ihn verdrehsicher auszubilden. Der abgeflachte, ebene Oberflächenbereich, der zumindest auf zwei einander gegenüberliegenden Oberflächenbereichen des Flanschkragens vorhanden sein kann, verkleinert die ursprünglich vorhandene kreisförmige Querschnittsfläche, so dass das Einsatzstück in der Breite extrem schmal und damit auch die Kabelöffnung des Gehäuses in gleicher Weise entsprechend schmal ausgebildet werden können. Vorzugsweise können auch mehrere, der Umrissform eines Quadrates oder Rechteckes entsprechende "Abflachungen" vorhanden sein, wie beispielhaft Ausführungsformen zeigen. Dadurch ist es möglich, zwei nebeneinander liegende Gehäuseöffnungen extrem eng beieinander anzuordnen, was eine entsprechend kleine Querschnittsabmessung des Gehäuses in Richtung durch die beiden Öffnungen hindurch möglich macht.

Der sich an den Ringbereich anschließende Hülsenbereich des als Crimpflansch ausgebildeten Einsatzstückes besitzt vorzugsweise zumindest eine umlaufende Nut, um einen möglichst rutschfesten Sitz eines auf das Hülsenteil aufgeschobenen Mantels eines Kabels zu ermöglichen. Das Ausbilden des freien Endes des Hülsenbereichs mit einer konischen Wandverjüngung erleichtert das Aufschieben eines Kabelmantels auf das Hülsenteil.

Das Einsatzstück wird mit seinen Nuten in die Stege der Kabelöffnung hineingepresst. Der so geschaffene Press-Sitz des Einsatzstückes in einer Kabelöffnung lässt sich dadurch noch vergrößern, dass in seiner Stirnfläche eines seiner Flanschkragen Einprägungen vorgenommen werden. Diese Einprägungen verursachen ganz geringe Materialausformungen auf der dazu gegenüberliegenden Stirnfläche des Flanschkragens, mit der der Flanschkragen an dem Steg der Kabelöffnung anliegt.

Ein für solche Einsatzstücke ausgelegtes Bus-Gehäuse, das insbesondere störstrahlsicher ausgebildet und mit zwei Befestigungsschrauben versehen ist, kann zwei Kabelöffnungen aufweisen, die einen axialen gegenseitigen Abstand zwischen 10 und 13 mm (Millimeter), insbesondere 11,5 mm, besitzen. Der mit den im Stand der Technik vorhandenen Crimpflanschen mögliche minimale Abstand liegt bei über 14 mm.

Zwei in der Zeichnung dargestellte erfindungsgemäße Bus-Gehäuse, die mit Kabelöffnungen ausgestattet sind, in die die erfindungsgemäßen Einsatzstücke eingesetzt sind, besitzen ein erstes im Wesentlichen quaderförmiges Gehäuseteil, an dessen einem Ende ein Steckverbinder wie im vorliegenden Beispielsfall ein 9poliger D-Sub-Steckverbinder angeschlossen werden kann. Der Querschnitt dieses ersten Gehäuseteils entspricht der Größe des 9poligen D-Sub-Steckverbinders. An dem anderen Ende des quaderförmigen ersten Gehäuseteils ist ein querschnittsmäßig demgegenüber kleineres Halsteil ausgebildet. Dieses Halsteil ist einstückig mit dem ersten Gehäuseteil verbunden. An das Halsteil schließt sich ein Kopfteil an, in dem stirnseitig die beiden Kabelöffnungen vorhanden sind. Das Gehäuse besteht aus einem im Wesentlichen wannenförmigen Unterteil und einem im Wesentlichen plattenförmigen Deckel. Das Unterteil und der Deckel sind durch den Deckel hindurch miteinander verschraubbar. Die Verschraubung erfolgt im vorliegenden Fall über drei Schrauben, von denen eine Schraube im Übergangsbereich zwischen dem Kopfteil und dem Halsteil und dort mittig zwischen den beiden Öffnungen vorhanden ist.

Die Schraubenköpfe der beiden Befestigungsschrauben, mittels derer das Gehäuse beispielsweise an einer Frontplatte angeschraubt werden kann, befinden sich außerhalb des Halsteils. Die Schraubenköpfe sind daher von außen für ein Drehwerkzeug frei zugänglich.

Das Kopfteil kann auch geneigt zur Längsachse des Gehäuses ausgerichtet sein, ohne dass dadurch die Zugänglichkeit der Befestigungsschrauben beeinträchtigt würde.

Zwei weitere in der Zeichnung dargestellte erfindungsgemäße, derartige Bus-Gehäuse umhüllen den Steckverbinder zum größten Teil, so dass dadurch ihre Breitenabmessung größer ist als die entsprechende Breitenabmessung eines 9poligen D-Sub-Steckverbinders. Darüber hinaus ist bei der abgewinkelten Gehäuseform das Halsteil nur einseitig eingeschnürt ausgebildet; die zur Abwinklung abgewandte schmale Längsseite verläuft geradlinig vom Bereich des Steckverbinders bis in den Kopfbereich des Gehäuses.

Weitere Ausgestaltungen und Vorteile zu den erfindungsgemäßen Gehäusen und den in solche Gehäuse eingesetzten Einsatzstücken sind den in den Ansprüchen fernerhin aufgeführten Merkmalen sowie den nachfolgenden Ausführungs beispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine Draufsicht auf ein Bus-Gehäuse nach der Erfindung mit seinem Gehäuse-Deckel,
- Fig. 2: eine Innensicht des Gehäuse-Unterteils des Bus-Gehäuses nach Fig. 1, mit Anschlussmöglichkeiten für zwei an dieses Gehäuse anzuschließende Kabel,
- Fig. 3: eine Darstellung entsprechend Fig. 1 für eine zweite Ausführungsform eines erfindungsgemäßen Bus-Gehäuses,
- Fig. 4: einen Querschnitt durch das Bus-Gehäuse nach Fig. 1,
- Fig. 5: eine Ansicht des Bus-Gehäuses aus Richtung der Pfeile 5 in Fig. 4,
- Fig. 6: eine auseinandergezogene Darstellung der,in Fig. 5 erkennbaren Stirnseite des Bus-Gehäuses,
- Fig. 7: eine erste perspektivische Ansicht eines aus der Stirnseite gemäß Fig. 5 herausragenden Crimpflansches,
- Fig. 8: eine andere perspektivische Ansicht des Crimpflansches nach Fig. 7,
- Fig. 9: einen statt des Crimpflansches nach Fig. 7, 8 in ein Bus-Gehäuse nach Fig. 1 oder 3 einsetzbaren Blindstopfen in einer ersten Ansicht,
- Fig. 10: eine stirnseitige Außenansicht des Blindstopfens nach Fig. 9,
- Fig. 11: eine Draufsicht auf eine dritte Ausführungsform eines erfindungsgemäßen Bus-Gehäuses,
- Fig. 12: eine Innensicht des Gehäuse-Unterteils des Bus-Gehäuses nach Fig. 11, mit in das Gehäuse einsetzbaren zwei Crimpflanschen,
- Fig. 13: eine auseinandergezogene Teil-Darstellung des Bus-Gehäuses nach Fig. 11, 12 im Bereich seiner in das Gehäuse einsetzbaren beiden Crimpflansche,
- Fig. 14: eine erste perspektivische Ansicht eines Crimpflansches nach Fig. 11,
- Fig. 15: eine zweite perspektivische Ansicht des Crimpflansches nach Fig. 11,
- Fig. 16: einen statt des Crimpflansches nach Fig. 14 oder 15 in ein Bus-Gehäuse nach Fig. 11 einsetzbaren Blindstopfen in einer ersten Ansicht,
- Fig. 17: eine stirnseitige Außenansicht des Blindstopfens nach Fig. 16,
- Fig. 18: eine Unteransicht des Gehäuses nach Fig. 11,
- Fig. 19: eine Unteransicht einer vierten Ausführungsform eines erfindungsgemäßen Bus-Gehäuses,
- Fig. 20: eine Ansicht des Bus-Gehäuses nach Fig. 19 aus Richtung der Pfeile 20 in Fig. 19.

### WEGE ZUM AUSFÜHREN DER ERFINDUNG

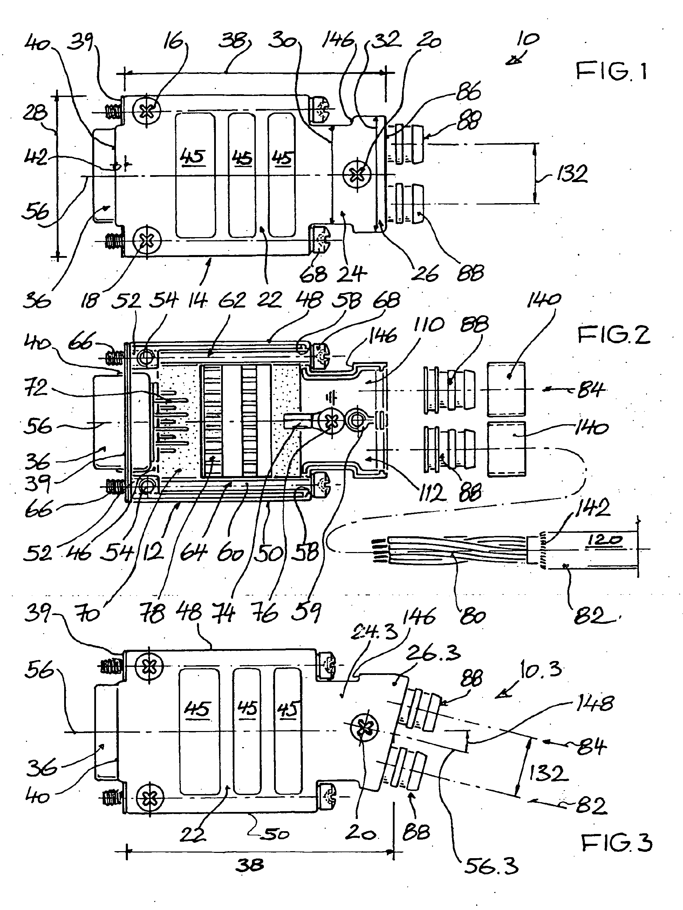

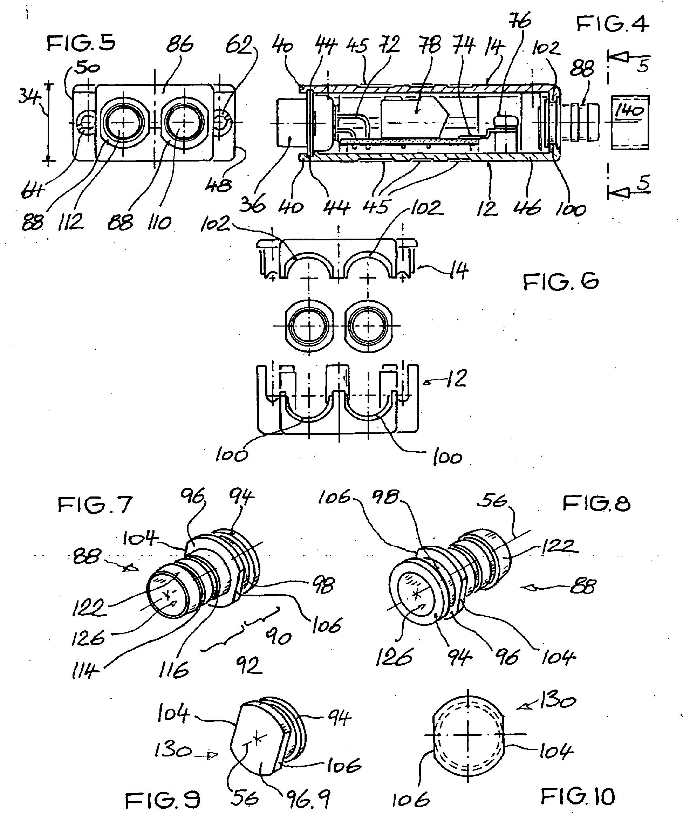

Ein Bus-Gehäuse 10 besitzt ein wannenförmiges Gehäuseunterteil 12 (Fig. 2), auf das ein in etwa plattenförmiger Gehäuse-Deckel 14 mittels dreier Deckelschrauben 16, 18, 20 aufgeschraubt ist (Fig. 1). Das Gehäuse 10 besitzt ein erstes, etwa quaderförmiges Gehäuseteil 22. An dieses Gehäuseteil 22 schließt sich - in Fig. 1 nach rechts - ein Gehäuse-Halsteil 24 an. Das Halsteil 24 endet - in Fig. 1 nach rechts - in einem Gehäuse-Kopfteil 26. Während die Breite 28 im Bereich des ersten Gehäuseteils 22 im vorliegenden Beispielsfall 31 mm (Millimeter) beträgt, besitzt das Halsteil 24 eine Breite 30 von lediglich 19 mm. Das Kopfteil 26 besitzt eine Breite 32 von 22,5 mm. Die Höhe 34 des Bus-Gehäuses 10, die aus Fig. 5 ersichtlich ist, beträgt konstant 14,8 mm.

Die Breite 28 und die Höhe 34 des Gehäuses 10 sind größenmäßig abgestimmt auf einen D-Subminiatur-Steckverbinder 36, der im vorliegenden Fall 9polig ist. Dieser Steckverbinder 36 ist auf der in Fig. 1 linken Seite des ersten Gehäuseteils 22 vorhanden.

Die Länge 38 des Bus-Gehäuses 10 beträgt vom Kopfteil 26 bis vor den umlaufenden Flansch 39 des Steckverbinders 36 im vorliegenden Beispielsfall 48,5 mm. Sowohl der Deckel 14 als auch das Unterteil 12 besitzen einen Kragen 40, der das Gehäuse 10 um einen Längenbetrag 42 von im vorliegenden Beispielsfall 2,5 mm verlängert. Dieser Kragen 40 fasst aus Richtung des Deckels 14 und des Unterteils 12 den Flansch 39 des Steckverbinders 36 seitlich ein. Der Steckverbinder 36 sitzt mit diesem Flansch 39 in jeweils einer Nut 44, die in diese Kragen 40 vom Deckel 14 und vom Unterteil 12 eingeformt sind (Fig. 4).

Sowohl in den Deckel 14 als auch in das Unterteil 12 sind in das erste Gehäuseteil 22 im vorliegenden Fall etwa rechteckförmige, unterschiedlich große geringe Vertiefungen 45 eingebracht. Diese die Griffigkeit des Gehäuses 10 verbessernden Vertiefungen 45 können zusätzlich grafischer Natur sein. Außerdem können sie zumindest teilweise auch Beschriftungsetiketten aufnehmen, ohne dass sich in einem solchen Fall die Höhe 34 des Gehäuses 10 vergrößern würde.

Das Gehäuse-Unterteil 12 besitzt einen Boden 46, an den sich rechtwinklig eine linke und rechte Seitenwand 48, 50 einstückig anschließen. Im Bereich des Steckverbinders 36 besitzen die beiden Seitenwände 48, 50 jeweils eine Verdickung 52, in der sich, rechtwinklig zum Boden 46, jeweils eine Bohrung 54 mit einem Innengewinde befindet. In diesen beiden Bohrungen 54 kann der Deckel 14 mittels seiner beiden Schrauben 16, 18 am Unterteil 12 festgeschraubt werden. Für die dritte Deckel-Schraube 20 ist im Übergangsbereich vom Halsteil 24 zum Kopfteil 26, im Bereich der Gehäuselängsachse 56, eine Hülse 59 mit einem Innengewinde, rechtwinklig vom Boden 46 auskragend, vorhanden.

Die beiden Seitenwände 48, 50 vom Unterteil 12 begrenzen auch das Halsteil 24 und das Kopfteil 26. Wegen der gegenüber dem ersten Gehäuseteil 22 unterschiedlichen Breite 30, 32 dieser beiden Teile 24, 26 verlaufen die beiden Seitenwände 48, 50 in einem entsprechenden Bogen. Im Übergangsbereich zwischen dem ersten Gehäuseteil 22 und dem Halsteil 24 ist jeweils eine Aussparung 58 vorhanden, durch die der Schaft 60 von zwei Befestigungsschrauben 62, 64 hindurchragt. Das jeweilige Schraubenende 66 dieser beiden Befestigungsschrauben 62, 64 ragt aus der dem Steckverbinder 36 zugewandten Stirnseite der beiden Verdickungen 52 heraus. Die beiden Schäfte 60 der Befestigungsschrauben 62, 64 verlaufen dabei unterhalb der Bohrungen 54, so dass die Deckelschrauben 16, 18 nicht mit den Befestigungsschrauben 62, 64 kollidieren.

Der jeweilige Schraubenkopf 68 der beiden Befestigungsschrauben. 62, 64 befindet sich seitlich äußerhalb des Halsteils 24. Das gegenüber dem Halsteil 24 etwas breitere Kopfteil 26 ist lediglich so breit, dass noch mit einem Drehwerkzeug die Schraubenköpfe 68 verschraubt und damit die Befestigungschrauben 62, 64 in beispielsweise eine Frontplatte eingeschraubt werden können und damit das Bus-Gehäuse 10 an eine solche Frontplatte angeschraubt werden und von derselben auch wieder losgeschraubt werden kann.

Im Inneren des Gehäuseunterteils 12 ist im vorliegenden Beispielsfall eine Leiterplatte 70 vorhanden, an der die bei dem vorliegenden 9poligen Steckverbinder 36 entsprechenden neun Anschlussstifte 72 angeschlossen sind. Die Leiterplatte 70 besitzt über eine Lötöse 74 einen Erdungsanschluss an eine Erdungsschraube 76. Die Erdungsschraube 76 befindet sich im Bereich des Halsteils 24 und dort auf der Längsachse 56. Auf der Leiterplatte 70 befindet sich eine Anschlussklemme 78 mit maximal neun, im vorliegenden Fall acht, Anschlussmöglichkeiten für Kabeladern 80 zweier in das Gehäuse 10 eingeführter Kabel 82, 84. Das Einführen der Kabel 82, 84 erfolgt über die - in Fig. 1 und 3 - rechte Stirnseite 86 des Gehäuses 10 mittels zweier Crimpflansche 88.

Jeder der beiden Crimpflansche 88 ist identisch ausgebildet. So besitzt ein Crimpflansch 88 einen Ringbereich 90, an den sich ein demgegenüber im Querschnitt kleinerer Hülsenbereich 92 anschließt (Fig. 7). Ringbereich 90 und Hülsenbereich 92 sind fest miteinander verbunden und sind im vorliegenden Fall gemeinsam als einteiliges Drehteil hergestellt.

In dem Ringbereich 90 ist zwischen zwei Flanschkragen 94, 96 eine umlaufende Nut 98 ausgebildet. Mit der Nut 98 sitzt der Crimpflansch 88 auf einem im Unterteil 12 und im Deckel 14 jeweils ausgebildeten kreisförmigen Steg 100, 102 (Fig. 4, 6). Dabei liegen die Flanschkragen 94, 96 beidseitig dicht an dem betreffenden Steg 100 beziehungsweise 102 an.

Der Flanschkragen 96 hat im vorliegenden Beispielsfall einen etwas größeren Durchmesser als der Flanschkragen 94. Auf seinen diametral gegenüberliegenden beiden Außenseiten besitzt der Flanschkragen 96 eine plane Oberfläche 104, 106. Diese beiden planen Oberflächen 104, 106 werden durch nachträgliches Abfräsen des Drehkörpers hergestellt. Mit Hilfe der beiden planen Oberflächen 104, 106 des Flanschkragens 96 sitzt der Crimpflansch 88 verdrehsicher in der jeweiligen Öffnung 110, 112 in der Stirnseite 86 des Gehäuses 10 oder 10.3. Die axiale Außenfläche des Flanschkragens 96 schließt bündig mit der Stirnseite 86 der Gehäuse 10, 10.3 ab. Mit seinem Hülsenbereich 92 ragt dabei jeder Crimpflansch 88 aus dem Gehäuse 10 nach außen heraus. In diesem Hülsenbereich 92 sind im vorliegenden Fall zwei umlaufende Nute 114, 116 eingeformt, um dem festen Sitz eines Kabelmantels 120 auf dem Crimpflansch 88 zu optimieren. Um den Kabelmantel 120 möglichst leicht auf den Hülsenbereich 92 aufschieben zu können, besitzt Letzterer eine konisch auslaufende Wandverjüngung 122.

Sofern kein Kabel 82, 84 in das Gehäuse 10 hineingeführt werden soll, wird die entsprechende Öffnung 110, 112 durch einen Blindstopfen 130 verschlossen (Fig. 9, 10). Dieser Blindstopfen 130 entspricht in seiner äußeren Kontur dem Ringbereich 90 des Crimpflansches 88. Im Unterschied zum Crimpflansch 88 ist der Flanschkragen 96 Teil einer Platte 96.9, die die Stirnseite des Blindstopfens 130 verschließt. Der Blindstopfen 130 kann dadurch in gleicher Weise wie der Crimpflansch 88 in eine Öffnung 110, 112 eingesetzt werden. Auch er sitzt in Richtung der Längsachse 56 zug- und druckfest und außerdem verdrehsicher in dem Gehäuse 10.

Aufgrund der einteiligen Ausbildung der in Form eines Crimpflansches 88 oder eines Blindstopfens 130 ausgebildeten Einsatzstücke können die Öffnungen 110, 112 mit einem sehr kleinen axialen Abstand 132 in dem Gehäuse 10 angeordnet werden. Durch die einteilige Ausbildung der Einsatzteile einerseits und durch die einander gegenüberliegenden planen Oberflächen 104, 106 andererseits kann dieser Abstand 132 sehr klein ausgebildet werden. Die beiden planen Oberflächen 104, 106 werden daher sinnvollerweise so vorgesehen, und dementsprechend die Stege 100, 102 im Bereich der beiden Öffnungen 110, 112 der Stirnseite 86 so entsprechend ausgeformt, dass die Crimpflansche 88 - und damit auch die Blindstopfen 130 - mit ihren planen Oberflächen 104, 106 parallel zu den Seitenwänden 48, 50 in das Unterteil 12 eingesetzt werden können. Nur in dieser Ausrichtung der Einsatzstücke 88, 130 kann dann der Deckel 14 auf das Gehäuseteil 12 aufgeschraubt und dicht an den Einsatzteilen 88,130 von oben her angelegt werden.

Jedes Kabel 82, 84 wird, wie an sich bekannt, mittels auf seinen Kabelmantel 120 aufgeschobener Crimphülse 140 an dem Crimpflansch 88 befestigt. Die Crimphülse 140 umschließt dabei auch das Schirmgeflecht 142, das im Bereich des Crimpflansches 88 auf die Stirnseite des entsprechend abgetrennten Kabelmantels 120 geführt ist. Die Crimphülse 140 wird dann bekanntermaßen auf den Kabelmantel 120 aufgepresst, wobei sie ihre kreisrunde Querschnittsform in eine entsprechend polygone Querschnittsform verändert.

Das in Fig. 3 dargestellte Bus-Gehäuse 10.3 entspricht weitestgehend dem Bus-Gehäuse 10. Abweichend ist lediglich, dass sein Kopfteil 26.3 schräg an dem Halsteil 24.3 angesetzt ist, so dass die Längsachse 56.3 des Kopfteils 26.3 in einem Winkel 148 von im vorliegenden Beispielsfall 15° (Altgrad) zur Längsachse 56 ausgerichtet ist. Auch bei dieser Ausführungsform haben zwei in das Gehäuse 10.3 eingeführte Kabel 84, 82 wiederum den minimalen Abstand 132 voneinander.

Die beiden parallel zueinander ausgerichteten Kabel 82, 84 erlauben, ebenso wie bei dem Gehäuse 10, ein unmittelbares, gegenseitig berührendes Aneinanderlegen mehrerer solcher Gehäuse im Bereich ihrer beiden schmalen Seitenwände 48, 50. Jedes dieser Gehäuse 10, 10.3 kann mittels der beiden Befestigungsschrauben 62, 64 an einer beispielsweise Frontplatte eines weiteren Gehäuses angeschraubt werden. Dadurch ist eine stabile Befestigung dieser Gehäuse 10, 10.3 möglich.

Die jeweiligen Köpfe 68 der beiden Befestigungsschrauben 62, 64 sind von außen zugänglich. Durch die Kopfverbreiterung 146 des Kopfteils 26 beziehungsweise 26.3 gegenüber dem Halsteil 24 beziehungsweise 24.3 können die Schrauben unverlierbar in dem Gehäuse angeordnet werden. Sofern die beiden Aussparungen 58, durch die die Schäfte 60 der beiden Befestigungsschrauben 62, 64 hindurchragen, schlitzförmig ausgebildet werden, können die beiden Schrauben 62, 64 in zum Boden 46 senkrechter Schwenkrichtung eingesetzt beziehungsweise herausgenommen werden. Um diese beiden Aussparungsschlitze zu verschließen und um ein "Verwackeln" der Schrauben 62, 64 im angeschraubten Zustand des Gehäuses 10 - Vergleichbares gilt für das Gehäuse 10.3 - zu verhindern, können beispielsweise an dem Deckel 14 des Gehäuses 10 zwei zum Boden 46 auskragende - in der Zeichnung nicht dargestellte - Wandstücke angeformt sein, die im zusammengeschraubten Zustand des Gehäuses 10 den von den beiden Schraubenschäften 60 nicht eingenommenen Raum der beiden Aussparungsschlitze verschließen.

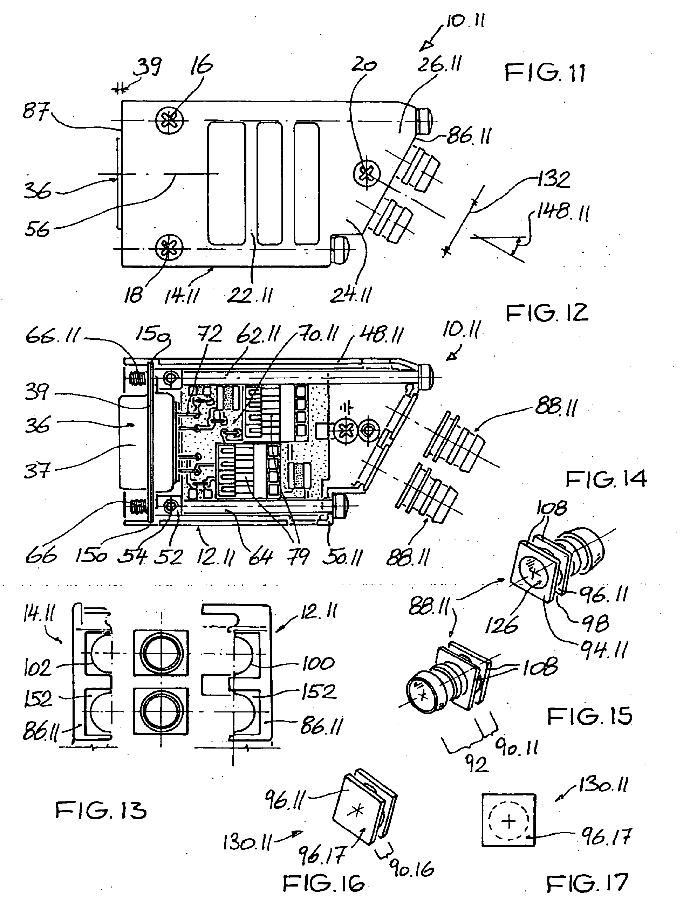

Auch das in den Figuren 11, 12, 18 in einer dritten Ausführungsform dargestellte Bus-Gehäuse 10.11 besitzt ein wannenförmiges Gehäuse-Unterteil 12.11, auf das ebenfalls ein etwa plattenförmiger Gehäuse-Deckel 14.11 mittels dreier Deckelschrauben 16, 18, 20 aufgeschraubt ist (Fig. 11). Das Gehäuse 10.11 besitzt ein erstes, etwa quaderförmiges Gehäuseteil 22.11, das sich vom ersten Gehäuseteil 22 des Bus-Gehäuses 10 im Wesentlichen darin unterscheidet, dass es das Gehäuse 37 des Steckverbinders 36 bis auf einen Überstand 39 (Fig. 11) einhüllt. Dieser Überstand 39 ist größenmäßig so bemessen, dass das mittels seiner Befestigungsschrauben 62.11, 64 an beispielsweise einer Frontplatte angeschraubte Gehäuse mit seiner in Fig. 11 linken, steckerseitigen Stirnseite 87 pressend an besagter Frontplatte anliegen kann und dass dabei der Steck-verbinder 36 voll in einem Gegensteckverbinder, der in einer Aussparung besagter Frontplatte vorhanden ist, eingesteckt ist.

Das Unterteil 12.11 rahmt mit seinen beiden schmalen Seitenwänden 48.11, 50.11 den Steckverbinder 36 ein. Der umlaufende Flansch 39 des Steckverbinders 36 sitzt in einer in diesen beiden Seitenwänden 48.11, 50.11 jeweils eingeformten Nut 150, die der im Deckel 14 und im Boden 46 des Gehäuses 10 eingeformten Nut 44 entspricht (Fig. 4). Die beiden Seitenwände 48.11, 50.11 besitzen im Bereich des umlaufenden Flansches 39 eine entsprechende Wandstärkenschwächung.

An das in etwa quaderförmige erste Gehäuseteil 22.11 des Gehäuses 10.11 schließt sich auf der zum Steckverbinder 36 gegenüberliegenden Seite ein Gehäuse-Halsteil 24.11 an, das im Unterschied zum Halsteil 24 des Bus-Gehäuses 10 nur einseitig schmaler als das quaderförmige Gehäuseteil 22.11 ist. Auf der in Fig. 11 und 12 unteren Seite, die der Seitenwand 50.11 benachbart ist, kann daher die gleiche Schraube 64 wie bei dem Bus-Gehäuse 10 verwendet werden. Die beiden Schraubenenden 66, 66.11 der beiden Befestigungsschrauben 64, 62.11 schauen im Gegensatz zum Bus-Gehäuse 10 nicht aus dem Gehäuse 10.11 heraus, da - wie oben bereits ausgeführt - das Gehäuseunterteil 12.11 das Gehäuse 37 des Steckverbinders 36 fast vollständig einrahmt.

Im Bereich der Seitenwand 48.11 geht das quaderförmige erste Gehäuseteil 22.11 geradlinig in das Halsteil 24.11 und weiter geradlinig in ein sich anschließendes Kopfteil 26.11 über. Die im Bereich der Seitenwand 48.11 vorhandene zweite Befestigungsschraube 62.11 besitzt daher eine zu der Befestigungsschraube 64 größere Länge.

Die Stirnseite 86.11 des Kopfteils 26.11 ist in einem Winkel 148.11 von im vorliegenden Fall 30° (Altgrad) gegen die Längsachse 56 geneigt.

In dem Gehäuseunterteil 12.11 ist eine Leiterplatte 70.11 vorhanden, an der - im vorliegenden Fall - vier Anschlussstifte 72 angeschlossen sind. Auf der Leiterplatte 70.11 befinden sich im vorliegenden Beispielsfall zwei Anschlussklemmen 79, die als sogenannte Zugfederklemmen ausgebildet sind und in die die Kabeladern ( 80 vergleiche Fig. 2) zweier in das Gehäuse 10.11 eingeführter Kabel eingeführt und kontaktmäßig fest angeschlossen werden können.

In die Stirnseite 86.11 können zwei Crimpflansche 88.11 fest eingesetzt werden. Diese beiden Crimpflansche 88.11 entsprechen mit ihrem jeweiligen Hülsenbereich 92 den Crimpflanschen 88. Ihr Ringbereich 90.11 unterscheidet sich vom Ringbereich 90 der Crimpflansche 88 dahingehend, dass die beiden Flanschkragen 94.11 und 96.11 die Umrissform eines Quadrates 108 haben. Die axiale Ansichtsfläche beider Flanschkragen 94.11, 96.11 ist identisch. Zwischen den beiden Flanschkragen 94.11, 96.11 ist eine Nut 98 in gleicher Weise wie bei den Crimpflanschen 88 vorhanden. Wegen der identischen Nut 98 sind die in dem Unterteil 12.11 und dem Deckel 14.11 ausgeformten Stege 100, 102 gleich geformt wie die Stege 100, 102 beim Bus-Gehäuse 10 (Fig. 13 beziehungsweise Fig. 6). Da der Flanschkragen 96.11 in der gleichen Weise wie der Flanschkragen 96 bündig mit der Stirnseite 86.11 verläuft, ist entsprechend der Umrissform des Flanschkragens 96.11 ein im vorliegenden Fall quadratischer Bereich 152 in dem Unterteil 12.11 und dem Deckel 14.11 im zusammengesetzten Zustand der beiden Teile ausgespart. Der auf der Innenseite des Unterteils beziehungsweise des Deckels vorhandene Flanschkragen 94.11 könnte bei dieser Ausführungsform auch eine kreisförmige Umrissform haben, wie sie bei dem Flanschkragen 94 des Crimpflansches 88 vorhanden ist. Der quadratische Flanschkragen 96.11 schafft die gewünschte verdrehsichere Befestigung des Crimpflansches 88.11 in dem Bus-Gehäuse 10.11. Im Unterschied zum Crimpflansch 88 kann der Crimpflansch 88.11 mit jeder seiner Quadratseiten ins Gehäuse eingesetzt werden. Während beim Crimpflansch 88 zwei um 180° gedrehte Einschubpositionen vorhanden sind, sind beim Crimpflansch 88.11 vier verschiedene Einschubpositionen vorhanden.

Der in Fig. 16 und 17 dargestellte Blindstopfen 130.11 entspricht funktionell dem Blindstopfen 130. Er besitzt einen dem Ringbereich 90.11 des Crimpflansches 88.11 entsprechenden Längsbereich 90.16, nur ist wiederum sein äußerer Flanschkragen 96.11 Teil einer Platte 96.17, die die Stirnseite des Blindstopfens 130.11 verschließt. Eine durchgängige kreiszylindrische Längsbohrung 126, die im Crimpflansch 88.11, in gleicher Weise wie im Crimpflansch 88, vorhanden ist, besitzen die Blindstopfen 130, 130.11 damit nicht. Der Blindstopfen 130.11 kann ebenso wie der Blindstopfen 130 in gleicher Weise wie der Crimpflansch 88.11 in das Gehäuse 10.11 zug- und druckfest und außerdem verdrehsicher eingesetzt werden.

Der axiale Abstand 132 der beiden Crimpflansche 88.11 entspricht dem gleichgroßen axialen Abstand 132 beim Bus-Gehäuse 10 oder 10.3.

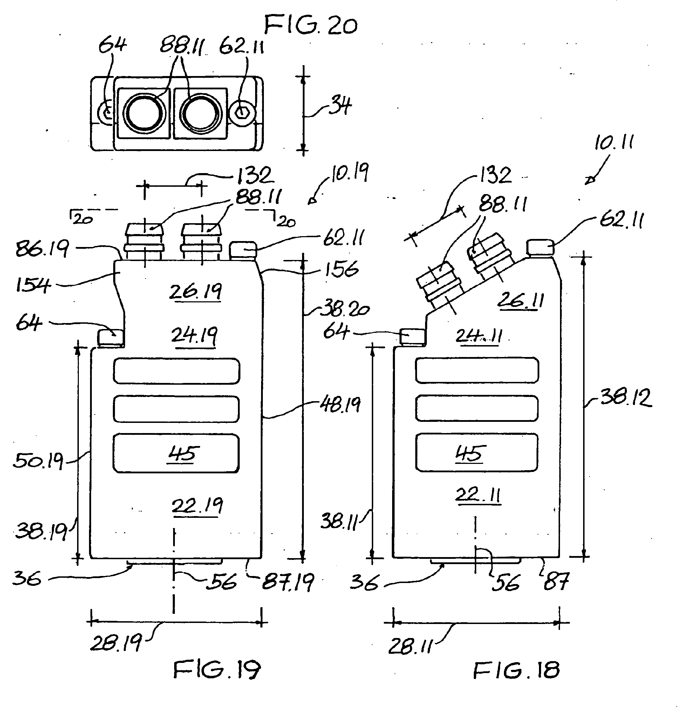

Die in Fig. 18 dargestellte Unterseite des Bus-Gehäuses 10.11 verdeutlicht, dass die drei Deckelschrauben 16, 18, 20 nicht durch das Unterteil 12.11 hindurchgehen. Wie Fig. 12 zeigt, sind diese Schrauben in Bohrungen 54 eingeschraubt, die in Verdickungen 52 vorhanden sind. Diese Verdickungen kragen vom Boden des Unterteils 12.11 in den Innenraum des Gehäuses hinein. Die gleiche Konstruktion ist auch bei dem Bus-Gehäuse 10 vorhanden, wie Fig. 2 verdeutlicht.

Das in Fig. 19 mit seiner Unterseite dargestellte Bus-Gehäuse 10.19 entspricht mit seinem ersten, etwa quaderförmigen Gehäuseteil 22.19 dem Gehäuseteil 22.11 des Bus-Gehäuses 10.11. Daher ist in diesem Gehäuse 10.19 auch die-kürzere - Befestigungsschraube 64 verwendbar. Auch das Halsteil 24.19 entspricht dem Halsteil 24.11 des Bus-Gehäuses 10.11. Das sich anschließende Kopfteil 26.19 unterscheidet sich vom Kopfteil 26.11 dahingehend, dass seine Stirnseite 86.19 parallel zu seiner steckerseitigen Stirnseite 87.19 vorhanden ist. Dadurch verläuft die Längsausrichtung der beiden Crimpflansche 88.11 parallel zur Längsachse 56.

Das Kopfteil 26.19 besitzt in Richtung zur kürzeren Seitenwand 50.19 anders als das Halsteil 24.19 eine Verbreiterung 154, so wie sie qualitativ auch beim Bus-Gehäuse 10 vorhanden ist. Die längere der beiden schmalen Seitenwände 48.19 besitzt im Bereich des Kopfteils 26.19 eine in das Innere des Gehäuses leicht geneigte Abschrägung 156. Dadurch lässt sich bei schmalseitig dicht aneinanderliegenden derartigen Gehäusen die längere Schraube 62.11 problemlos drehen. Diese Abschrägung 156 weist auch das Bus-Gehäuse 10.11 auf.

Die beiden Bus-Gehäuse 10.11, 10.19 besitzen eine Breite 28.11, 28.19 von etwa 32,5 mm. Diese Breite ist etwas größer als die Breite 28 von etwa 31 mm bei den Bus-Gehäusen 10, 10.3. Die Breite 28.11 und 28.19 ist dadurch begründet, dass der Flansch 39 des Steckverbinders 36 bei den beiden Bus-Gehäusen 10.11 und 10.19 eingerahmt wird.

Die kürzere Länge 38.11 beziehungsweise 38.19 der Gehäuse 10.11 beziehungsweise 10.19 beträgt etwa 41,6 mm. Die größere Länge 38.12 und 38.20 der beiden Gehäuse 10.11 und 10.19 beträgt etwa 59 mm. Diese Maße enthalten nicht die jeweiligen Schraubköpfe der Befestigungsschrauben sowie die aus den Gehäusen herausschauenden Bereiche der Crimpflansche. Diese Maße berücksichtigen ferner nicht den aus den Gehäusen herausschauenden schmalen Randbereich (Überstand 39) des jeweiligen Steckverbinders. Die Höhe 34 der beiden Gehäuse 10.11 und 10.19 beträgt ebenfalls wie bei den Gehäuse 10 und 10.3 etwa 14,8 mm.

Auch die Gehäuse 10 und 10.3 könnten mit den "quadratischen" Crimpflanschen 88.11 ausgestattet werden; es müssten dazu nur entsprechend quadratische Einformungen in der Stirnfläche 86 ausgebildet werden. Im umgekehrten Fall könnten auch die Gehäuse 10.11 und 10.19 bei vorhandenen "runden" Einformungen mit den Crimpflanschen 88 ausgestattet werden.

## Patentansprüche

1. Einsatzstück, das in eine Öffnung (110, 112) eines mit einem Steckverbinder (36) auszustattenden Bus-Gehäuses (10, 10.3, 10.11, 10.19) einsetzbar ist, wobei
- die Öffnung (110, 112) in einer Außenwand des Bus-Gehäuses (10, 10.3, 10.11, 10.19) vorhanden ist und zum Einführen der Adern (80) eines Kabels (82, 84) in das Innere dieses Gehäuses hinein vorgesehen ist,
- das Einsatzstück ein die Öffnung verschließender Blindstopfen (130, 130.11) oder ein das Kabel (82, 84) zugfest und druckfest an diesem Gehäuse haltender Crimpflansch (88, 88.11) ist,
**dadurch gekennzeichnet, dass**
- das Einsatzstück eine zwischen einem inneren Flanschkragen (94, 94.11) und einem äußeren Flanschkragen (96, 96.9, 96.11) zumindest bereichsweise umlaufende Nut (98) besitzt,
- diese Nut (98) formmäßig einem in die Öffnung (110, 112) einspringenden, zumindest bereichsweise umlaufenden Steg (100, 102) so angepasst ist, dass das Einsatzstück innerhalb der Öffnung (110, 112) an dem Bus-Gehäuse zugfest und druckfest verankerbar ist,
- das Einsatzstück ein als Drehteil hergestelltes, einteiliges Bauteil ist.

2. Einsatzstück nach Anspruch 1,
**dadurch gekennzeichnet, dass**
- das Einsatzstück (88, 88.11, 130, 130.11) beziehungsweise das Drehteil zumindest einen nicht rotationssymmetrischen Oberflächenbereich (104, 106, 108) besitzt, so dass es verdrehsicher in einer Öffnung (110, 112) verankerbar ist.

3. Einsatzstück nach einem der vorstehenden Ansprüche,
**dadurch gekennzeichnet, dass**
- das als Crimpflansch (88, 88.11) ausgebildete Einsatzstück einen Ringbereich (90, 90.11) besitzt, der zwei voneinander beabstandete, umlaufende Flanschkragen (94, 94.11, 96, 96.11) aufweist,
- zumindest einer der Flanschkragen (96, 96.11) zumindest einen abgeflachten, ebenen Oberflächenbereich (104, 106, 108) besitzt.

4. Einsatzstück nach Anspruch 3,
**dadurch gekennzeichnet, dass**
- zwei einander gegenüberliegende, abgeflachte, ebene Oberflächenbereich (104, 106, 108) in zumindest einem Flanschkragen (96, 96.11) vorhanden sind.

5. Einsatzstück nach Anspruch 3 oder 4,
**dadurch gekennzeichnet, dass**
- zumindest der eine Flanschkragen (96.11), insbesondere beide Flanschkragen (94.11, 96.11), umrissmäßig die Form eines Vierkants besitzt beziehungsweise besitzen.

6. Einsatzstück nach Anspruch 5,
**dadurch gekennzeichnet, dass**
- der Vierkant eine rechteckige, insbesondere die Form eines Quadrates (108) besitzt.

7. Einsatzstück nach einem der vorstehenden Ansprüche,
**dadurch gekennzeichnet, dass**
- der sich in axialer Richtung an den Ringbereich (90, 90.11) anschließende Hülsenbereich (92) eines Crimpflansches (88, 88.11) zumindest eine umlaufende Nut (114) besitzt.

8. Einsatzstück nach Anspruch 7,
**dadurch gekennzeichnet, dass**
- das freie Ende des Hülsenbereichs (92) eine konische Wandverjüngung (122) besitzt.

9. Einsatzstück nach einem der vorstehenden Ansprüche,
**dadurch gekennzeichnet, dass**
- die Innenwandung der durchgehenden Längsbohrung (126) des Crimpflansches (88, 88.11) kreiszylindrisch ausgebildet ist.

10. Einsatzstück nach einem der vorstehenden Ansprüche,
**dadurch gekennzeichnet, dass**
- es in seiner Ausführungsform als Blindstopfen (130, 130.11) einen kreiszylindrischen Körper besitzt, der zwei voneinander beabstandete, umlaufende Flanschkragen (96.9, 96.11, 94, 94.11) aufweist,
- zumindest einer der Flanschkragen (96.9, 96.11) zumindest einen abgeflachten, ebenen Oberflächenbereich (104, 106, 108) besitzt.

11. Einsatzstück nach Anspruch 10,
**dadurch gekennzeichnet, dass**
- zwei einander gegenüberliegende abgeflachte, ebene Oberflächenbereiche (104, 106, 108) in zumindest einem Flanschkragen (96.9, 96.11) vorhanden sind.

12. Einsatzstück nach Anspruch 10 oder 11,
**dadurch gekennzeichnet, dass**
- zumindest der eine Flanschkragen (96.11), insbesondere beide Flanschkragen (96.11, 94.11), umrissmäßig die Form eines Vierkants, insbesondere die Form eines Rechteckes oder eines Quadrates (108), besitzt beziehungsweise besitzen.

13. Einsatzstück nach einem der vorstehenden Ansprüche,
**dadurch gekennzeichnet, dass**
E inprägungen in der Stirnfläche eines Flanschkragens (94, 94.11) vorhanden sind.

14. Bus-Gehäuse, insbesondere störstrahlsicheres Bus-Gehäuse (10, 10.3, 10.11, 10.19) für einen Steckverbinder (36), das anschraubbar ausgebildet ist,
- mit zumindest zwei dicht beieinander angeordneten Öffnungen (110, 112), durch die im geöffneten Zustand des Gehäuses (10, 10.3, 10.11, 10.19) jeweils ein mit dem Steckverbinder (36) zu verbindendes Kabel (82, 84) in das Gehäuse hinein- beziehungsweise aus dem Gehäuse herausführbar ist,
**dadurch gekennzeichnet, dass**
- in jede der beiden Öffnungen (110, 112) ein Einsatzstück (88, 88.11, 130, 130.11) nach einem der vorstehenden Ansprüche eingesetzt ist.

15. Bus-Gehäuse nach Anspruch 14,
**dadurch gekennzeichnet, dass**
- die beiden Öffnungen (110, 112) einen axialen gegenseitigen Abstand (132) aufweisen, der zwischen 10 mm (Millimeter) und 13 mm, insbesondere 11,5 mm, groß ist.

16. Bus-Gehäuse nach Anspruch 14 oder 15,
**dadurch gekennzeichnet, dass**
- ein erstes im Wesentlichen quaderförmiges Gehäuseteil (22, 22.11, 22.19) vorhanden ist, an dessen einem Ende der Steckverbinder (36) ansetzbar ist,
- das andere Ende dieses ersten Gehäuseteils (22, 22.11, 22.19) mit einem querschnittsmäßig demgegenüber kleineren Halsteil (24, 24.11, 24.19) einstückig verbunden ist,
- mit dem Halsteil (24, 24.11, 24.19) ein Kopfteil (26, 26.11, 26.19) einstückig verbunden ist, in dem stirnseitig zumindest die beiden Öffnungen (110, 112) vorhanden sind,
- das Gehäuse (10, 10.3, 10.11, 10.19) aus einem im Wesentlichen wannenförmigen Unterteil (12, 12.11) und einem im Wesentlichen plattenförmigen Deckel (14, 14.11) besteht, die beide miteinander verschraubbar (16, 18, 20) sind.

17. Bus-Gehäuse nach einem der Ansprüche 14 bis 16,
**dadurch gekennzeichnet, dass**
- zumindest drei Schrauben (16, 18, 20) vorhanden sind zum Anschrauben des Deckels (14, 14.11) an das Unterteil (12, 12.11),
- zumindest eine dieser Schrauben (20) im Übergangsbereich zwischen Kopfteil (26, 26.3, 26.11, 26.19) und Halsteil (24, 24.3, 24.11, 24.19), und dort in axialer Richtung zwischen den beiden Öffnungen (110, 112), vorhanden ist.

18. Bus-Gehäuse nach einem der Ansprüche 16 oder 17,
**dadurch gekennzeichnet, dass**
- zwei Befestigungsschrauben (62, 64) für das Gehäuse (10, 10.3) im Bereich des ersten Gehäuseteils (22) vorhanden sind,
- Schraubenköpfe (68) der Befestigungsschrauben (62, 64) außerhalb des Halsteils (24, 24.3) vorhanden sind.

19. Bus-Gehäuse nach einem der Ansprüche 14 bis 18,
**dadurch gekennzeichnet, dass**
- die beiden Längsachsen der beiden Öffnungen (110,112) parallel zu der Längsachse (56) des Gehäuses (10, 10.19) ausgerichtet sind.

20. Bus-Gehäuse nach einem der Ansprüche 14 bis 19,
**dadurch gekennzeichnet, dass**
- die beiden Längsachsen der beiden Öffnungen parallel zueinander ausgerichtet sind und jeweils einen Neigungswinkel (148, 148.11) etwa zwischen 30° (Altgrad) und Null° (Altgrad) mit der Längsachse (56) des Gehäuses (10.3, 10.11) einschließen.

21. Bus-Gehäuse nach Anspruch 20,
**dadurch gekennzeichnet, dass**
- der Neigungswinkel (148, 148.11) etwa 15° (Altgrad) oder 30° (Altgrad) beträgt.

22. Bus-Gehäuse nach einem der Ansprüche 14 bis 21,
**dadurch gekennzeichnet, dass**
- gedachte Verlängerungen der Schäfte (60) der Befestigungsschrauben (62, 64) außerhalb der vom Halsteil (24, 24.3) und Kopfteil (26, 26.3) eingenommenen Lichtraumprofile liegen.

23. Bus-Gehäuse nach einem der Ansprüche 14 bis 22,
**dadurch gekennzeichnet, dass**
- die gedachte Verlängerung des Schaftes nur von einer Befestigungsschraube (64) außerhalb der vom Halsteil (24.11, 24.19) und Kopfteil (26.11, 26.19) eingenommenen Lichtraumprofile liegt.

24. Bus-Gehäuse nach einem der Ansprüche 14 bis 23,
**dadurch gekennzeichnet, dass**
- die maximale Breite (28) des Gehäuses (10, 10.3) in etwa der vergleichbaren Breite des Steckverbinders (36) entspricht.

25. Bus-Gehäuse nach einem der Ansprüche 14 bis 23,
**dadurch gekennzeichnet, dass**
- die maximale Breite (28.11, 28.19) des Gehäuses (10.11, 10.19) größer ist als die vergleichbare Breite des Steckverbinders (36), so dass der Steckverbinder (36) durch die in Breitenrichtung einander gegenüberliegenden beiden schmalen Seitenwände (48.11, 50.11, 48.19, 50.19) den Steckverbinder (36) beidseitig einrahmen.

26. Bus-Gehäuse nach einem der Ansprüche 14 bis 23,
**dadurch gekennzeichnet, dass**
- eine Leiterplatte (70, 70.11) im Inneren des Gehäuses (10, 10.3, 10.11, 10.19) vorhanden ist, an die der Steckverbinder (36) und durch die beiden Öffnungen (110, 112) hindurchgeführte Kabeladern (80) von zwei Kabeln (82, 84) jeweils anschließbar sind.

27. Bus-Gehäuse nach einem der Ansprüche 14 bis 26,
**dadurch gekennzeichnet, dass**
- das Gehäuse (37) des Steckverbinders (36) bis auf einen umlaufenden schmalen Überstand (39) innerhalb des Lichtraumprofils des Bus-Gehäuses (10.11, 10.19) vorhanden ist, so dass der Steckverbinder (36) bis auf diesen Überstand (39) von Wandbereichen des Bus-Gehäuses (10.11, 10.19) umhüllt ist.

28. Bus-Gehäuse nach einem der Ansprüche 14 bis 27,
**dadurch gekennzeichnet, dass**
- es (10, 10.3) für einen 9poligen Steckverbinder (36) ausgelegt ist,
- es eine Breite (28) von etwa 31 mm (Millimeter), eine Höhe (34) von etwa 14, 8 mm und eine Länge (38) von etwa 48,5 mm besitzt,
- wobei diese Länge (38) einerseits bei einem Gehäuse (10) mit einem Neigungswinkel von 0° (Altgrad) und andererseits bei einem Gehäuse (10.3) mit einem Neigungswinkel von 15° vorhanden ist und jeweils zwischen den beiden Öffnungen (110, 112) gemessen wird bis in die Höhe des umlaufenden Flansches (39) des Steckverbinders (36).

29. Bus-Gehäuse nach einem der Ansprüche 14 bis 27,
**dadurch gekennzeichnet, dass**
- es (10.11, 10.19) für einen 9poligen Steckverbinder (36) ausgelegt ist,
- es (10.11, 10.19) eine Breite von etwa 32,5 mm (Millimeter), eine Höhe von etwa 14,8 mm und eine Länge von etwa 59 mm besitzt,
- wobei diese Länge einerseits bei einem Gehäuse (10.19) mit einem Neigungswinkel von Null° (Altgrad) und andererseits bei einem Gehäuse (10.11) mit einem Neigungswinkel größer Null° (Altgrad), insbesondere 30° (Altgrad), vorhanden ist und diese Länge jeweils den Schraubenkopf der längeren (62.11) seiner beiden Befestigungsschrauben (62.11, 64) nicht berücksichtigt.

## Claims

1. Insert, which can be inserted into an opening (110, 112) in a bus housing (10, 10.3, 10.11, 10.19) to be equipped with a plug connector (36), wherein
- the opening (110, 112) is provided in an outer wall of the bus housing (10, 10.3, 10.11, 10.19) and is intended for insertion of the cores (80) of a cable (82, 84) into the interior of this housing,
- the insert is a blanking plug (130, 130.11), which closes the opening, or a crimping flange (88, 88.11) which holds the cable (82, 84) on this housing such that it is resistant to tension and compression,
**characterized in that**
- the insert has a groove (98), which is circumferential at least in places between an inner flange collar (94, 94.11) and an outer flange collar (96, 96.9, 96.11),
- the shape of this groove (98) is matched to a web (100, 102), which projects into the opening (110, 112) and is circumferential at least in places, such that the insert can be anchored within the opening (110, 112) on the bus housing such that it is resistant to tension and compression,
- the insert is an integral component, produced as a turned part.

2. Insert according to Claim 1,
**characterized in that**
- the insert (88, 88.11, 130, 130.11), to be precise the turned part, has at least one surface area (104, 106, 108) which is not rotationally symmetrical, such that it can be anchored such that it cannot rotate in an opening (110, 112).

3. Insert according to one of the preceding claims,
**characterized in that**
- the insert, which is in the form of a crimping flange (88, 88.11), has a ring area (90, 90.11) which has two circumferential flange collars (94, 94.11, 96, 96.11) which are at a distance from one another,
- at least one of the flange collars (96, 96.11) has at least one flattened, planar surface area (104, 106, 108).

4. Insert according to Claim 3,
**characterized in that**
- two mutually opposite, flattened, planar surface areas (104, 106, 108) are provided in at least one flange collar (96, 96.11).

5. Insert according to Claim 3 or 4,
**characterized in that**
- at least one flange collar (96.11), in particular both flange collars (94.11, 96.11), has or have an outline in the form of a quadrilateral.

6. Insert according to Claim 5,
**characterized in that**
- the quadrilateral is rectangular, in particular in the form of a square (108).

7. Insert according to one of the preceding claims,
**characterized in that**
- the sleeve area (92), which is adjacent to the ring area (90, 90.11) in the axial direction, of a crimping flange (88, 88.11) has at least one circumferential groove (114).

8. Insert according to Claim 7,
**characterized in that**
- the free end of the sleeve area (92) has a conical wall taper (122).

9. Insert according to one of the preceding claims,
**characterized in that**
- the inner wall of the longitudinal hole (126) which passes through the crimping flange (88, 88.11) is circular-cylindrical.

10. Insert according to one of the preceding claims,
**characterized in that**
- when in the form of a blanking plug (130, 130.11), the insert has a circular-cylindrical body which has two circumferential flange collars (96.9, 96.11, 94, 94.11) which are at a distance from one another,
- at least one of the flange collars (96.9, 96.11) has at least one flattened, planar surface area (104, 106, 108).

11. Insert according to Claim 10,
**characterized in that**
- two mutually opposite flattened, planar surface areas (104, 106, 108) are provided in at least one flange collar (96.9, 96.11).

12. Insert according to Claim 10 or 11,
**characterized in that**
- at least one flange collar (96.11), in particular both flange collars (96.11, 94.11), has or have an outline in the form of a quadrilateral, in particular in the form of a rectangle or a square (108).

13. Insert according to one of the preceding claims,
**characterized in that**
- indentations are provided in the end surface of one flange collar (94, 94.11).

14. Bus housing, in particular a bus housing (10, 10.3, 10.11, 10.19) which is proof against interference radiation, for a plug connector (36), which is designed such that it can be screwed on,
- having at least two openings (110, 112), which are arranged close to one another and through which, when the housing (10, 10.3, 10.11, 10.19) is in the open state, in each case one cable (82, 84), which is to be connected to the plug connector (36), can be passed into the housing and out of the housing,
**characterized in that**
- an insert (88, 88.11, 130, 130.11) according to one of the preceding claims is inserted into each of the two openings (110, 112).

15. Bus housing according to Claim 14,
**characterized in that**
- the two openings (110, 112) have an axial distance (132) between them which is between 10 mm (millimetres) and 13 mm, in particular 11.5 mm.

16. Bus housing according to Claim 14 or 15,
**characterized in that**
- a first essentially square housing part (22, 22.11, 22.19) is provided, to one of whose ends the plug connector (36) can be fitted,
- the other end of this first housing part (22, 22.11, 22.19) is integrally connected to a neck part (24, 24.11, 24.19) whose cross section is smaller than it,
- a head part (26, 26.11, 26.19) is integrally connected to the neck part (24, 24.11, 24.19), in the end face of which head part (26, 26.11, 26.19) at least the two openings (110, 112) are provided,
- the housing (10, 10.3, 10.11, 10.19) consists of a lower part (12, 12.11), which is essentially in the form of a trough, and a cover (14, 14.11), which is essentially in the form of a plate, the two of which can be screwed to one another (16, 18, 20).

17. Bus housing according to one of Claims 14 to 16,
**characterized in that**
- at least three screws (16, 18, 20) are provided for screwing the cover (14, 14.11) to the lower part (12, 12.11),
- at least one of these screws (20) is provided in the junction area between the head part (26, 26.3, 26.11, 26.19) and the neck part (24, 24.3, 24.11, 24.19), and in the axial direction between the two openings (110, 112) there.

18. Bus housing according to one of Claims 16 or 17,
**characterized in that**
- two attachment screws (62, 64) for the housing (10, 10.3) are provided in the area of the first housing part (22),
- screw heads (68) of the attachment screws (62, 64) are provided outside the neck part (24, 24.3).

19. Bus housing according to one of Claims 14 to 18,
**characterized in that**
- the two longitudinal axes of the two openings (110, 112) are aligned parallel to the longitudinal axis (56) of the housing (10, 10.19).

20. Bus housing according to one of Claims 14 to 19,
**characterized in that**
- the two longitudinal axes of the two openings are aligned parallel to one another and each include an inclination angle (148, 148.11) of approximately between 30° (degrees) and zero° (degrees) with the longitudinal axis (56) of the housing (10.3, 10.11).

21. Bus housing according to Claim 20,
**characterized in that**
- the inclination angle (148, 148.11) is about 15° (degrees) or 30° (degrees).

22. Bus housing according to one of Claims 14 to 21,
**characterized in that**
- imaginary extensions of the shanks (60) of the attachment screws (62, 64) lie outside clearance area profiles assumed by the neck part (24, 24.3) and the head part (26, 26.3).

23. Bus housing according to one of Claims 14 to 22,
**characterized in that**
- the imaginary extension of the shank when only one attachment screw (64) lies outside clearance area profiles assumed by the neck part (24.11, 24.19) and the head part (26.11, 26.19).

24. Bus housing according to one of Claims 14 to 23,
**characterized in that**
- the maximum width (28) of the housing (10, 10.3) corresponds approximately to the comparable width of the plug connector (36).

25. Bus housing according to one of Claims 14 to 23,
**characterized in that**
- the maximum width (28.11, 28.19) of the housing (10.11, 10.19) is greater than the comparable width of the plug connector (36), such that the two narrow side walls (48.11, 50.11, 48.19, 50.19), which are mutually opposite in the width direction, of the plug connector (36) bound the plug connector (36) on both sides.

26. Bus housing according to one of Claims 14 to 23,
**characterized in that**
- a printed circuit board (70, 70.11) is provided in the interior of the housing (10, 10.3, 10.11, 10.19), to which printed circuit board (70, 70.11) the plug connector (36) and cable cores (80), which have been passed through the two openings (110, 112), of two cables (82, 84) can in each case be connected.

27. Bus housing according to one of Claims 14 to 26,
**characterized in that**
- the housing (37) of the plug connector (36) is provided, within the clearance area profile of the bus housing (10.11, 10.19), except for a circumferential narrow projection (39), such that the plug connector (36) is sheathed by wall areas of the bus housing (10.11, 10.19), except for this projection (39).

28. Bus housing according to one of Claims 14 to 27,
**characterized in that**
- the bus housing (10, 10.3) is designed for a 9-pole plug connector (36),
- the bus housing has a width (28) of about 31 mm (millimetres), a height (34) of about 14.8 mm, and a length (38) of about 48.5 mm,
- wherein this length (38) is measured into the height of the circumferential flange (39) on the plug connector (36), on the one hand in the case of a housing (10) with an inclination angle of 0° (degrees) and on the other hand in the case of a housing (10.3) with an inclination angle of 15°, and in each case between the two openings (110, 112).

29. Bus housing according to one of Claims 14 to 27, **characterized in that**
- the bus housing (10.11, 10.19) is designed for a 9-pole plug connector (36),
- the bus housing (10.11, 10.19) has a width of about 32.5 mm (millimetres), a height of about 14.8 mm and a length of about 59 mm,
- wherein this length is present on the one hand in the case of a housing (10.19) with an inclination angle of zero° (degrees) and on the other hand in the case of a housing (10.11) with an inclination angle of greater than zero° (degrees), in particular 30° (degrees), and this length in each case does not take account of the screw head of the longer (62.11) of its two attachment screws (62.11, 64).

## Revendications

1. Pièce d'insertion qui peut être insérée dans une ouverture (110, 112) d'un boîtier de bus (10, 10.3, 10.11, 10.19) à équiper d'un connecteur (36), dans laquelle
- l'ouverture (110, 112) est présente dans une paroi extérieure du boîtier de bus (10, 10.3, 10.11, 10.19) et est prévue pour l'introduction des conducteurs (80) d'un câble (82, 84) à l'intérieur de ce boîtier,
- la pièce d'insertion est un bouchon (130, 130.11) obturant l'ouverture ou une bride à sertir maintenant le câble (82, 84) de manière résistante à la traction et à la pression sur ce boîtier,
**caractérisée en ce que**
- la pièce d'insertion possède une rainure (98) périphérique au moins par endroits entre une collerette de bride intérieure (94, 94.11) et une collerette de bride extérieure (96, 96.9, 96.11),
- cette rainure (98) est adaptée par sa forme à une nervure (100, 102) périphérique au moins par endroits qui s'encliquette dans l'ouverture (110, 112) de façon que la pièce d'insertion puisse être ancrée de manière résistante à la traction et à la pression sur le boîtier de bus à l'intérieur de l'ouverture (110, 112),
- la pièce d'insertion est un élément d'un seul tenant réalisé sous forme de pièce tournée.

2. Pièce d'insertion selon la revendication 1,
**caractérisée en ce que**
- la pièce d'insertion (88, 88.11, 130, 130.11), respectivement la pièce tournée, possède au moins une zone de surface (104, 106, 108) sans symétrie de révolution de façon à pourvoir être ancrée sans possibilité de rotation dans une ouverture (110, 112).

3. Pièce d'insertion selon une des revendications précédentes,
**caractérisée en ce que**
- la pièce d'insertion réalisée sous forme de bride à sertir (88, 88.11) possède une zone annulaire (90, 90.11) qui présente deux collerettes de bride (94, 94.11, 96, 96.11) périphériques, distantes l'une de l'autre,
- au moins une des collerettes de bride (96, 96.11) possède au moins une zone de surface aplatie, plane (104, 106, 108).

4. Pièce d'insertion selon la revendication 3,
**caractérisée en ce que**
- deux zones de surface aplaties, planes (104, 106, 108) opposées l'une à l'autre sont présentes sur au moins une collerette de bride (96, 96.11).

5. Pièce d'insertion selon la revendication 3 ou 4,
**caractérisée en ce que**
- au moins une collerette de bride (96.11), en particulier les deux collerettes de bride (94.11, 96.11), possède ou possèdent en contour la forme d'un quadrilatère.

6. Pièce d'insertion selon la revendication 5, **caractérisée en ce que**
- le quadrilatère possède une forme rectangulaire, en particulier la forme d'un carré (108).

7. Pièce d'insertion selon une des revendications précédentes,
**caractérisée en ce que**
- la partie douille (92) d'une bride à sertir (88, 88.11) qui fait suite à la zone annulaire (90, 90.11) en direction axiale possède au moins une rainure périphérique (114).

8. Pièce d'insertion selon la revendication 7,
**caractérisée en ce que**
- l'extrémité libre de la partie douille (92) possède un amincissement de paroi conique (122).

9. Pièce d'insertion selon une des revendications précédentes,
**caractérisée en ce que**
- la paroi intérieure du perçage longitudinal traversant (126) de la bride à sertir (88, 88.11) est de forme cylindrique circulaire.

10. Pièce d'insertion selon une des revendications précédentes,
**caractérisée en ce que**
- elle présente dans son mode de réalisation sous forme de bouchon (130, 130.11) un corps cylindrique circulaire qui comporte deux collerettes de bride (96.9, 96.11, 94, 94.11) périphériques distantes l'une de l'autre,
- au moins une des collerettes de bride (96.9, 96.11) possède au moins une zone de surface aplatie, plane (104, 106, 108).

11. Pièce d'insertion selon la revendication 10,
**caractérisée en ce que**
- deux zones de surface aplaties, planes (104, 106, 108) opposées l'une à l'autre sont présentes sur au moins une collerette de bride (96.9, 96.11).

12. Pièce d'insertion selon la revendication 10 ou 11,
**caractérisée en ce que**
- au moins une collerette de bride (96.11), en particulier les deux collerettes de bride (94.11, 96.11), possède ou possèdent en contour la forme d'un quadrilatère, en particulier la forme d'un rectangle ou d'un carré (108).

13. Pièce d'insertion selon une des revendications précédentes,
**caractérisée en ce que**
- des renfoncements sont présents dans la surface frontale d'une collerette de bride (94, 94.11).

14. Boîtier de bus, en particulier boîtier de bus (10, 10.3, 10.11, 10.19) protégé contre les interférences électromagnétiques pour un connecteur (36), qui est réalisé de manière vissable,
- avec au moins deux ouvertures (110, 112) disposées très près l'une de l'autre, à travers lesquelles, lorsque le boîtier (10, 10.3, 10.11, 10.19) est ouvert, on peut faire entrer dans le boîtier ou sortir du boîtier chaque fois un câble (82, 84) à relier au connecteur (36),
**caractérisé en ce que**
- une pièce d'insertion (88, 88.11, 130, 130.11) selon une des revendications précédentes est insérée dans chacune des deux ouvertures (110, 112).

15. Boîtier de bus selon la revendication 14,
**caractérisé en ce que**
- les deux ouvertures (110, 112) présentent une distance mutuelle axiale (132) comprise entre 10 mm (millimètres) et 13 mm, en particulier de 11,5 mm.

16. Boîtier de bus selon la revendication 14 ou 15,
**caractérisé en ce que**
- une première partie de boîtier (22, 22.11, 22.19) essentiellement parallélépipédique est présente, à l'une des extrémités de laquelle le connecteur (36) peut être mis en place,
- l'autre extrémité de cette première partie de boîtier (22, 22.11, 22.19) est reliée d'un seul tenant à une partie de cou (24, 24.11, 24.19) plus petite en section transversale,
- une partie de tête (26, 26.11, 26.19), dans laquelle au moins les deux ouvertures (110, 112) sont présentes frontalement, est reliée d'un seul tenant à la partie de cou (24, 24.11, 24.19),
- le boîtier (10, 10.3, 10.1 1, 10.19) est composé d'une partie inférieure (12, 12.11) essentiellement en forme de cuve et d'un couvercle (14, 14.11) essentiellement en forme de plaque, qui peuvent être vissées ensemble (16, 18, 20).

17. Boîtier de bus selon une des revendications 14 à 16,
**caractérisé en ce que**
- au moins trois vis (16, 18, 20) sont présentes pour visser le couvercle (14, 14.11) sur la partie inférieure (12, 12.11),
- au moins une de ces vis (20) est présente dans la zone de transition entre partie de tête (26, 26.3, 26.11, 26.19) et partie de cou (24, 24.3, 24.11, 24.19), entre les deux ouvertures (110, 112) en direction axiale.

18. Boîtier de bus selon une des revendications 16 ou 17,
**caractérisé en ce que**
- deux vis de fixation (62, 64) pour le boîtier (10, 10.3) sont présentes dans la zone de la première partie de boîtier (22),
- les têtes de vis (68) des vis de fixation (62, 64) sont présentes à l'extérieur de la partie de cou (24, 24.3).

19. Boîtier de bus selon une des revendications 14 à 18,
**caractérisé en ce que**
- les deux axes longitudinaux des deux ouvertures (110,112) sont orientés parallèlement à l'axe longitudinal (56) du boîtier (10, 10.19).

20. Boîtier de bus selon une des revendications 14 à 19,
**caractérisé en ce que**
- les deux axes longitudinaux des deux ouvertures sont orientés parallèlement l'un à l'autre et font chaque fois un angle d'inclinaison (148, 148.11) par exemple compris entre 30° (degrés) et 0° (degré) avec l'axe longitudinal (56) du boîtier (10.3, 10.11).

21. Boîtier de bus selon la revendication 20,
**caractérisé en ce que**
- l'angle d'inclinaison (148, 148.11) est par exemple égal à 15° (degrés) ou 30° (degrés).

22. Boîtier de bus selon une des revendications 14 à 21,
**caractérisé en ce que**
- des prolongements imaginaires des corps (60) des vis de fixation (62, 64) se situent à l'extérieur des profils d'espace libre occupés par la partie de cou (24, 24.3) et la partie de tête (26, 26.3).

23. Boîtier de bus selon une des revendications 14 à 22,
**caractérisé en ce que**
- le prolongement imaginaire du corps de seulement une vis de fixation (64) se situe à l'extérieur des profils d'espace libre occupés par la partie de cou (24.11, 24.19) et la partie de tête (26.11, 26.19).

24. Boîtier de bus selon une des revendications 14 à 23,
**caractérisé en ce que**
- la largeur maximale (28) du boîtier (10, 10.3) correspond à peu près à la largeur comparable du connecteur (36).

25. Boîtier de bus selon une des revendications 14 à 23,
**caractérisé en ce que**
- la largeur maximale (28.11, 28.19) du boîtier (10.11, 10.19) est plus grande que la largeur comparable du connecteur (36), de sorte que le connecteur (36) [...] encadrent des deux côtés le connecteur (36) par les deux parois latérales étroites (48.11, 50.11, 48.19, 50.19) opposées dans le sens de la largeur.

26. Boîtier de bus selon une des revendications 14 à 23,
**caractérisé en ce que**
- une carte de circuits imprimés (70, 70.11) est présente à l'intérieur du boîtier (10, 10.3, 10.11, 10.19), à laquelle le connecteur (36) et des conducteurs de câble (80) de deux câbles (82, 84) passés à travers les deux ouvertures (110, 112) peuvent être raccordés.

27. Boîtier de bus selon une des revendications 14 à 26,
**caractérisé en ce que**
- le boîtier (37) du connecteur (36), à l'exception d'une étroite saillie périphérique (39), est présent à l'intérieur du profil d'espace libre du boîtier de bus (10.11, 10.19), de sorte que le connecteur (36), à l'exception de cette saillie (39), est enveloppé par des zones de paroi du boîtier de bus (10.11, 10.19).

28. Boîtier de bus selon une des revendications 14 à 27,
**caractérisé en ce que**
- il (10, 10.3) est conçu pour un connecteur (36) à neuf pôles,
- il possède une largeur (28) d'environ 31 mm (millimètres), une hauteur (34) d'environ 14,8 mm et une longueur (38) d'environ 48,5 mm,
- cette longueur (38) étant présente d'une part dans le cas d'un boîtier (10) avec un angle d'inclinaison de 0° (degré) et d'autre part dans le cas d'un boîtier (10.3) avec un angle d'inclinaison de 15° et étant mesurée chaque fois entre les deux ouvertures (110, 112) jusqu'à la hauteur de la bride périphérique (39) du connecteur (36).

29. Boîtier de bus selon une des revendications 14 à 27,
**caractérisé en ce que**
- il (10.11, 10.19) est conçu pour un connecteur (36) à neuf pôles,
- il (10.11, 10.19) possède une largeur d'environ 32,5 mm (millimètres), une hauteur d'environ 14,8 mm et une longueur d'environ 59 mm,
- cette longueur étant présente d'une part dans le cas d'un boîtier (10.19) avec un angle d'inclinaison de 0° (degré) et d'autre part dans le cas d'un boîtier (10.11) avec un angle d'inclinaison supérieur à 0° (degré), en particulier de 30° (degrés), et cette longueur ne tenant, dans chaque cas, pas compte de la tête de vis de la plus longue (62.11) de ses deux vis de fixation (62.11, 64).
